# EUROPEAN PATENT SPECIFICATION

(11) **EP 4 049 080 B1**
(45) Date of publication and mention of the grant of the patent: **18.12.2024**
(21) Application number: 20800723.7
(22) Date of filing: 14.10.2020
(51) Int. Cl.: G02B 26/06, G02B 21/00

(54) **OPTICAL SYSTEM**
OPTISCHES SYSTEM
SYSTÈME OPTIQUE

(30) Priority: 21.10.2019 IT 201900019235
(43) Date of publication of application: 31.08.2022
(73) Proprietor: Dynamic Optics S.r.l., 36030 Sarcedo (VI) (IT)
(72) Inventor: BONORA, Stefano, 36030 Sarcedo (VI) (IT)
(74) Representative: Caldon, Giuliano
(86) International application number: PCT/IB2020/059625
(87) International publication number: WO 2021/079232

(56) References cited:
- US-A1- 2012 026 466
- GEUN-YOUNG YOON, SETH PANTANELLI, LANA J. NAGY: "Large-dynamic-range Shack-Hartmann wavefront sensor for highly aberrated eyes", J. OF BIOMEDICAL OPTICS, 1 May 2006 (2006-05-01), XP040214182, DOI: 10.1117/1.2197860

## Description

Optical systems consist of elements such as lenses, mirrors, light sources and detectors. In ideal systems, the quality of detected images is determined by the theoretical limit given by the diffraction of light. In reality, image quality is limited by aberrations. I.e., by deformations of the wavefront due to imperfections of the components thereof, or a non-uniformity of the medium crossed by the light. This occurs, for example, in telescopes, where light must cross the atmosphere, or even in microscopes, due to the inhomogeneity of the sample.

To solve these problems, a technology called adaptive optics is used which, by means of deformable optics, can compensate for these distortions.

The elements of an adaptive optics system are therefore a deformable device, an aberration measurement sensor and a control system.

This technology is used successfully in telescopes, greatly improving the resolution thereof.

In case of other optical instruments, such as, for example, microscopy, it is not possible, or very inconvenient, to use a wavefront sensor.

Therefore, wavefront correction strategies based on optimization algorithms have been used.

This type of algorithms aims at improving the quality of an image by searching for the shape of the deformable element which compensates for the contribution given by the present aberrations. The advantage of this technique is that it does not require a wavefront sensor. The disadvantage is that the optimization operation is very slow, and being based on algorithms of a stochastic nature, the result is not always repeatable. It is also strongly dependent on the type of image which is being captured.

To solve this limitation, a type of correction based on wavefront measurement has recently been implemented. This technique is based on the measurement thereof, by means of the acquisition of images taken by partially limiting the aperture of the pupil, i.e., by creating sub-pupils in different positions thereof. Thereby, the image on the system sensor will translate by an amount equal to the average gradient of the wavefront inside the sub-pupil. Therefore, with a series of acquisitions synchronized with the displacement of the sub-pupil, it is possible to sample the gradient of the wavefront and then measure the distortion thereof. Therefore, having a wavefront modulator available, it is possible to compensate for such distortion.

US2012/0026466 A1 presents a wavefront measurement system which comprises an aperture placed in the optical beam.

In the article Geunyoung Yoon et al, "Large dynamic range Shack Hartmann wavefront sensor for highly aberrated eyes", J. OF BIOMEDICAL OPTICS, 1 May 2006 (2006-05-01), DOI: 10.1117/1.2197860, the authors add to the standard architecture of a Shack Hartmann (SH) sensor a mask which can cover a lenslet every two.

A first implementation of this method is described in ("Adaptive optics via pupil segmentation for high-resolution imaging in biological tissues", Na Ji, Daniel E Milkie & Eric Betzig, Nature Methods 7, 141-147 (2010) and US 8,730,573 B2). In this implementation, a liquid crystal modulator is used both to segment the pupil of a microscope into sub-pupils and to independently control the wavefront within the sub-pupil itself. By virtue of the very high spatial resolution of the wavefront modulation of the liquid crystal panels, this technique has the advantage of being capable of dividing the light beam of the microscope into sub-beams whose phase can be controlled independently.

The main disadvantage is that the liquid crystal modulator, being divided into cells of micrometric size (in general, approximately from 3 to 50 microns), generates a series of diffracted beams which propagate at different angles at the exit from the modulator. In fact, in this type of systems, it is essential to use an occlusion, an optical stop, to block such beams (called "field stop"), as described in [US 8,730,573 B2] and in Nature Methods 7, 141-147 (2010), which would otherwise overlap the image on the detector, ruining the contrast thereof. The elimination of the diffracted orders occurs by positioning the field stop in an image plane. This is achieved by positioning, after the modulator, a pair of lenses in the focal plane of which the field stop is positioned. Therefore, although this solution is very interesting, it always involves a considerable amount of space.

For example, in case of microscopy, it is not possible to position the entire correction system inside the microscope lens system. Therefore, this invention has only been implemented on microscopes designed and realized to incorporate this technique. Furthermore, it can not be conceived as a device to be added to existing microscopes. In fact, it is not possible to implement it on microscopes of the commercial type, in which the internal parts of the microscope are not accessible and/or modifiable.

A further limitation of this embodiment is that the liquid crystal modulators with the highest optical efficiency (70-80%) are of the reflective type (LCoS, Liquid Crystal on Silicon) while transmissive liquid crystal modulators (Spatial Light Modulators) have a much lower optical efficiency and are therefore not used in microscopy.

Furthermore, this invention is limited to the use with microscopy systems employing laser sources. In fact, liquid crystal modulators work well with monochromatic sources and with a well-defined light polarization. However, they do not work with wide light spectra, such as, for example, conventional bright field microscopes or optical coherence tomography.

### Summary of the invention

It is the object of this invention to integrate the wavefront measurement and correction element in a single device.

Such object is achieved by the optical system according to claim 1.

The structure comprises measuring means configured to measure the displacement of the image on the detector following a change in the position of the light beam occlusion. Furthermore, the structure comprises controllable actuator means, to actuate the wavefront modulator depending on the displacement of the image detected by the measuring means.

Such device will not require external elements, such as, for example, a diffracted order removal system, and can be inserted in an optical system in series with other elements of the system without altering the properties and functioning thereof, while adding the aberration correction function. For example, it can be inserted inside the lens system of a microscope. Therefore, it can be used as instrumentation in any type of microscope which is already assembled.

Hereinafter, reference will be made to the Figures shown in the drawings to describe the present invention in detail, in accordance with several preferred embodiments.

### Description of the drawings

Figure 1a: simplified diagram of a generic system which creates an image of a sample on a detector. The integrated adaptive optics device is placed adjacent to the lens system.
Figure 1b: simplified diagram of a generic system which creates an image of a sample on a detector. The integrated adaptive optics device is placed inside the lens system.
Figure 2a: sectional view of the integrated adaptive optics device.
Figure 2b: top view of the variable iris and of the position thereof with respect to the optical pupil.
Figure 3a: sectional view of the lens system of the optical system with the integrated adaptive optics device adjacent in case of absence of optical aberrations.
Figure 3b: sectional view of the lens system of the optical system with the integrated adaptive optics device adjacent in case of presence of optical aberrations.
Figure 3c: sectional view of the lens system of the optical system with the integrated adaptive optics device adjacent in case of correction of the optical aberrations, obtained by a suitable deformation of the deformable lens.
Figure 4a: top view of an embodiment of the variable iris.
Figure 4b: axonometric view of the device.
Figure 4c: top view of the optical pupil and of the wavefront sampling areas, obtained by scanning the pupil itself by rotating the variable iris.
Figure 5: flow diagram of the operations required to correct aberrations.

### Detailed description of the invention

With the aid of the accompanying drawings, the technical contents and detailed description of the present invention are reported below on the basis of preferred embodiments, not intended to limit the application purpose thereof.

In this invention, a deformable lens and a variable iris are coupled. "Variable iris" means an occlusion of an optical beam which leaves a portion thereof free; such occlusion can change position and shape within the beam. The variable iris is suitable to create sub-pupils. "Sub-pupils" mean a portion of the optical beam of any shape, size and position; such portion of the beam can be selected on the optical pupil plane but also on any other plane lying within the light beam of the system. The wavefront modulation can occur by changing the shape of one or both surfaces of the lens. For example, see: S.Bonora et al, Opt. Express 23, 21931-21941 (2015). Other deformable lenses can exploit other principles, such as electrowetting (US8649102B2) or the use of transparent elastic membranes (WO2015052233A1).

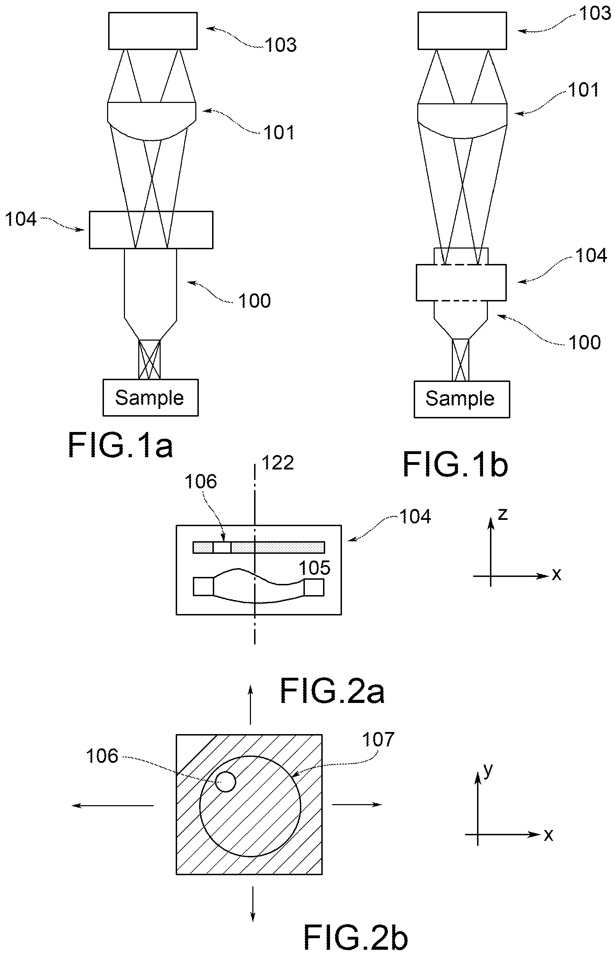

Figure 1a is a simplified diagram of a generic image system. By way of non-limiting example, in case of a microscope, element 100 is the lens system, 101 is the "tube lens" and 103 a detector. Element 104 is the device for measuring and correcting aberrations. Device 104 can be conveniently positioned in the pupil of the system but, in some cases, also in other positions within the optical path. The diagram is shown by way of example and is representative of, but not limited to, white light microscopy techniques such as "bright field", fluorescence, light sheet, single molecule, structured light, etc. It can also be applied to other image acquisition techniques of the scanning type, such as, by way of non-limiting example, to microscopy of the confocal, two-photon, multi-photon, STED, optical coherence tomography types. Figure 1b shows how, in a very convenient manner, the correction system 104 can be integrated within the lens system 100 of the optical system.

Figures 2a and 2b show sections of a possible implementation. Inside the device 104, a deformable lens 105 is placed, positioned along the optical axis 122 of the system. Such lens can change the shape thereof, so as to compensate for the distortions present in the optical path, whether generated in the sample or from imperfections or misalignments of the optical components. Facing the lens, there is a sheet of opaque material with one or more holes (variable iris or sub-pupils) 106 with a diameter smaller than the diameter of the pupil of the system 107. A handling system can change the position of the variable iris, therefore illuminating a different sub-pupil 106 so as to scan all or part of the pupil of the system. During the scanning operation, the detector 103 captures the images of the sample and determines the displacement thereof in relation to a reference image. This image is the one relating to a sub-pupil placed on the optical axis.

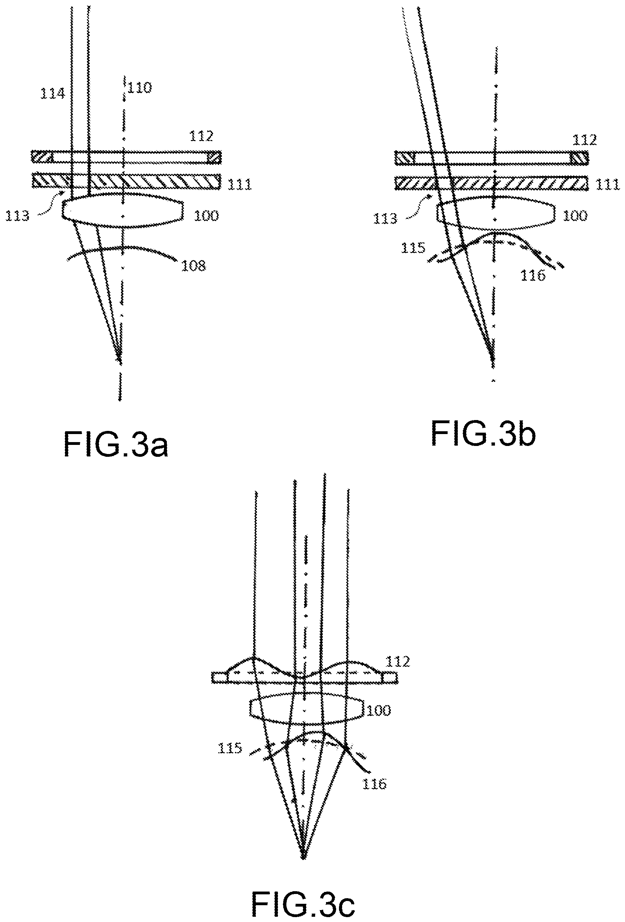

Figure 3a shows this principle. For a sample in which there are no aberrations, the wavefront from any single point in the image is spherical 108. Therefore, by passing through the lens system, it produces a beam parallel to the optical axis 110. The light is then filtered by the variable iris 111, exclusively passing through the sub-pupil 113. With the deformable lens in a flat position, the beam 114 propagates parallel to the axis without undergoing deviations.

Figure 3b shows the case in which there are distortions of the spherical wavefront (solid line 116) which deviate from the ideal one (dashed line 115). Therefore, the light passing through the sub-pupil 113 will no longer propagate parallel to the optical axis but at a certain angle. The greater the distortion of the wavefront, the greater this angle will be. The slope of the wavefront in the position of the sub-pupil 113 will be measurable by the translation of the image on the detector. The measurement of these displacements is directly proportional to the gradient of the wavefront. It is therefore possible to deform the lens so that it compensates for this distortion and improve image quality. Figure 3c shows this situation in which the deformable lens 112 assumes a shape such as to compensate for the deformation of the wavefront and to ensure that the beams emitted from a point propagate parallel to the optical axis. In this case, the variable iris is configured so as to leave the whole optical aperture open (therefore, it has not been shown in the Figures) so as to capture the image with the correct wavefront.

This operation can be repeated several times to improve the quality of the correction. In general, 2 to 4 iterations are required to achieve a good level of correction.

The variable iris can be formed by a sheet of opaque material, with suitable holes, preferably round, but possibly of any shape, which select a smaller part of the pupil. Figure 2a, 108 shows the device which integrates both the variable iris 109 and the deformable lens 110. By way of explanation, the aperture 110 shows a variable iris position. Figure 2B shows an exemplary diagram showing the variable iris 109 and the optical pupil of the system. The variable iris has the task of moving the sub-pupil so as to entirely or partially scan the pupil.

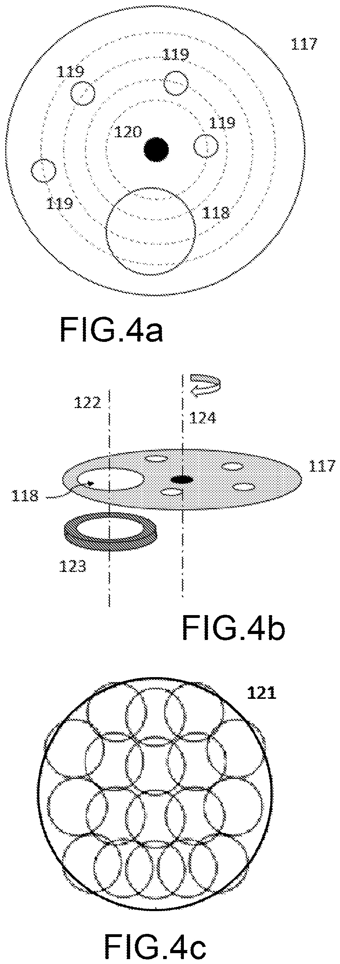

In a preferred embodiment (Figure 4a), the variable iris consists of a disc 117 made of opaque material, and a deformable lens positioned adjacent thereto as shown in Figure 2a. The disc can, for example, be made of metal or plastic material, metal deposition on glass, etc. The disc is designed so that, with a simple rotation about the pin 120, it is possible to fully scan the pupil.

In order to make a very compact perforated disc and, at the same time, use only one rotation operation, Figure 4a shows that with 4 holes on the disc 119 placed in radial coordinates different with respect to the rotation axis and suitably spaced, it is possible to scan the entire pupil in 19 different positions as shown in Figure 4c. The dashed lines in Figure 4a show the trajectory of each hole during the rotation of the disc 117. In fact, the sub-pupils obtained with the holes 119 of the disc are arranged so as to completely scan the aperture of the pupil by simply rotating the disc 117. Scanning can occur with partial overlapping of the sub-pupils without overlapping. Furthermore, the aperture 118 allows to capture the correct image at the end of the correction procedure. Figure 4b shows a three-dimensional representation of the device. The adaptive lens 123, positioned centered with respect to the optical axis 122 and concentric with respect to the aperture 118 of the variable iris. In this position of the variable iris it is possible to capture images following the correction with adaptive optics. The variable iris can rotate about the rotation axis 124 thereof so that the pupil can be scanned by the sub-pupils 119. Figure 4c shows the pupil of the system 121 and how the irises 119 are capable of fully scanning the entire surface by rotating the disc 117.

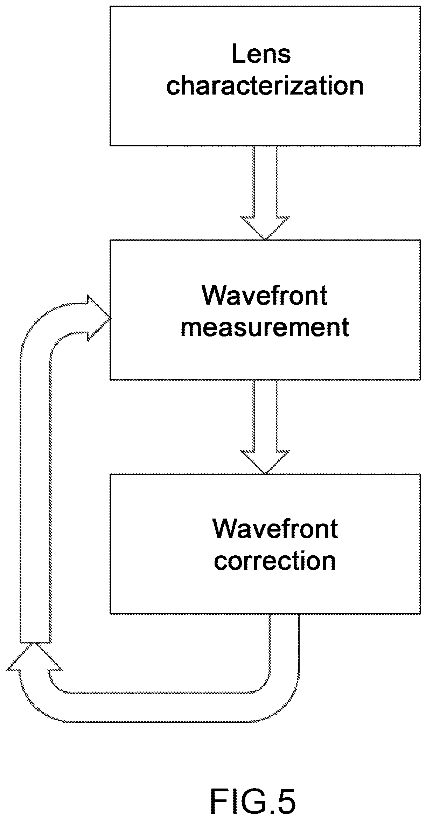

The correction procedure, which is not covered by the subject-matter of the claims, is shown in Figure 5. Initially, the procedure involves the characterization of the wavefront deformation functions given by each individual actuator of the deformable lens. This is achieved by activating each actuator independently and by measuring the generated wavefront. The deformation functions generated, also called influence functions in adaptive optics, are stored in a matrix called the matrix of influence functions "A". Within this matrix, each column contains the deformation of a single actuator. This information can also be obtained by activating multiple actuators simultaneously, by means of the technique called Hadamard matrix characterization.

The characterization can be carried out on the microscope by means of the technique described above, i.e., by moving the variable iris or on a separate optical system equipped with a wavefront sensor (for example with a "Shack-Hartmann" sensor).

The matrix of influence is used to create a model of the deformable lens in which the shape of the lens, or the wavefront generated therefrom, can be calculated as: F(x,y)=A*c, where "F" is the shape of the lens, "A" is the matrix of influence functions and "c" is the vector containing the control value given to each lens actuator.

The second operation is that of measuring the aberration of the system, which is carried out with the lens in a flat condition (all actuators off) or actuated on a previous position.

From the "Aber(x,y)" measurement of the wavefront, it is possible to calculate the control vector c to be given to the actuators of the deformable lens by means of the following calculation: c = - A-1 * Aber(x,y). Thereby, the lens deforms in the opposite manner with respect to the aberration, thus compensating for the effects thereof. This measurement and correction operation can be performed several times to improve the degree of correction.

This type of aberration correction can be used for the correction of any optical system. For example, in microscopes, as explained above, of the image detection type with camera, and of the scanning type, such as, by way of non-limiting example, microscopes of the confocal, two-photon, optical coherence tomography, STED types and others. It can also be used for correcting aberrations in laser systems, without the use of wavefront sensors and by measuring aberrations in the experimental chamber.

In other embodiments, the variable iris and the deformable lens can be conveniently placed outside the pupil of the optical system. For example, they can be placed in an image plane of a plane on which system aberrations arise.

In another embodiment, which is not covered by the subject-matter of the claims, the deformable lens and the variable iris can not be adjacent but placed on different positions in the optical system. By way of non-limiting example, they can be placed in mutual image planes.

In another embodiment, the variable iris can be placed together with more than one deformable lens to increase the degree of correction.

The variable iris can also comprise one or more suitably shaped parts which, by means of the movement or rotation thereof, can create sub-pupils. By way of non-limiting example, they can be a pair of slits which rotate or translate independently, or one, two or more perforated discs which rotate and translate independently.

## Claims

1. Optical system comprising:
- a lens system (100),
- a detector (103) suitable to capture an image of a sample, the image being formed on the detector by a light beam coming from the sample along an optical path, and
- a structure (104) for measuring and correcting aberrations of the optical system, wherein said structure comprises, within the optical path, a variable iris (111), the variable iris (111) being suitable to create sub-pupils (106, 113), each sub-pupil (106, 113) being a portion of the light beam, and the variable iris (111) being suitable to change the position of a light beam occlusion which allows the portion of the light beam to pass towards the detector (103),
wherein the structure (104) is configured to measure a wavefront aberration by measuring a displacement of the image on the detector following a change in the position of the light beam occlusion,
wherein the structure (104) comprises, within the optical path, a wavefront modulator; **characterised in that** the wavefront modulator is a deformable lens (105, 112, 123);
the structure being configured to correct the wavefront aberration by operating the wavefront modulator as a function of the displacement of the image on the detector (103); said image being related to a said sub-pupil (106, 113) ;
wherein the wavefront modulator and the variable iris (111) are adjacent.

2. Optical system according to claim 1, wherein the variable iris (111) is movable in the optical path so as to measure the wavefront aberration by measuring the displacement of a focal spot of a laser on the detector (103) in one or more positions of the variable iris (111).

3. Optical system according to claim 1 or 2, wherein the variable iris (111) is suitable to change the shape of the light beam occlusion which allows a portion of the light beam to pass towards the detector (103).

4. Optical system according to any one of claims 1-3, wherein the variable iris (111) is a lamellar structure.

5. Optical system according to any one of claims 1 to 3, wherein the variable iris (111) is a perforated plate which can move orthogonally with respect to the optical axis.

6. Optical system according to any one of claims 1 to 3, wherein the variable iris (111) is a rotating foil (117) with one or more apertures (119, 118).

7. Optical system according to any one of the preceding claims, wherein the variable iris (111) has one or more sub-apertures (119).

8. Optical system according to any one of the preceding claims, wherein the variable iris (111) has one or more sub-apertures (119) and an aperture (118) of a size sufficient to not obstruct the pupil (107, 121) of the optical system.

9. Optical system according to any one of the preceding claims, wherein the wavefront modulator and the variable iris (111) are placed facing a rear aperture of the lens system (100).

10. Optical system according to any of the claims 1-8, wherein the wavefront modulator and the variable iris (111) are placed facing each other inside the lens system (100).

11. Optical system according to claim 9 or 10, wherein the wavefront modulator and the variable iris (111) are placed in the pupil (107, 121) of the optical system.

12. Optical system according to claim 9 or 10, wherein the wavefront modulator and the variable iris (111) are placed in image planes of the pupil (107, 121) of the optical system.

13. Microscope comprising an optical system according to any one of the preceding claims.

14. Laser device comprising an optical system according to any one of claims 1-12.

## Patentansprüche

1. Optisches System, umfassend:
- ein Objektiv (100),
- einen Detektor (103), der geeignet ist, ein Bild einer Probe zu erfassen, wobei das Bild auf dem Detektor durch einen entlang eines optischen Weges von der Probe kommenden Lichtstrahl gebildet wird, und
- eine Struktur (104) zum Messen und Korrigieren von Aberrationen des optischen Systems, wobei die genannte Struktur, im Inneren des optischen Weges, eine variable Blende (111) umfasst, wobei die variable Blende (111) geeignet ist, Unterpupillen (106, 113) zu bilden und jede Unterpupille (106, 113) ein Teil des Lichtstrahls ist und die variable Blende (111) geeignet ist, die Position einer Okklusion des Lichtstrahls zu ändern, die den Teil des Lichtstrahls zum Detektor (103) gelangen lässt,
wobei die Struktur (104) darauf ausgelegt ist, die Messung einer Wellenfrontaberration auszuführen, indem sie eine Verschiebung des Bildes auf dem Detektor im Anschluss an eine Änderung der Position der Okklusion des Lichtstrahls misst,
wobei die Struktur (104), im Inneren des optischen Weges, einen Wellenfrontmodulator umfasst;
**dadurch gekennzeichnet, dass** der Wellenfrontmodulator eine verformbare Linse ist (105, 112, 123);
wobei die Struktur darauf ausgelegt ist, die Aberration der Wellenfront zu korrigieren, indem sie den Wellenfrontmodulator abhängig von der Verschiebung des Bildes auf dem Detektor (103) betätigt; wobei das genannte Bild sich auf eine genannte Unterpupille (106, 113) bezieht;
wobei der Wellenfrontmodulator und die variable Blende (111) aneinander angrenzen.

2. Optisches System nach Anspruch 1, wobei die variable Blende (111) in dem optischen Pfad beweglich ist, um die Messung der Wellenfrontaberration durch Messen der Verschiebung eines Brennpunkts eines Lasers auf dem Detektor (103) in einer oder mehreren Positionen der variablen Blende (111) auszuführen.

3. Optisches System nach Anspruch 1 oder 2, wobei die variable Blende (111) geeignet ist, die Form der Okklusion des Lichtstrahls zu ändern, die einen Teil des Lichtstrahls zum Detektor (103) gelangen lässt.

4. Optisches System nach einem beliebigen der Ansprüche 1 bis 3, wobei die variable Blende (111) eine Lamellenstruktur ist.

5. Optisches System nach einem beliebigen der Ansprüche 1 bis 3, wobei die variable Blende (111) eine gelochte Platte ist, die sich orthogonal zur optischen Achse bewegen kann.

6. Optisches System nach einem beliebigen der Ansprüche 1 bis 3, wobei die variable Blende (111) ein rotierendes Blech (117) mit einer oder mehreren Öffnungen (119, 118) ist.

7. Optisches System nach einem beliebigen der vorangegangenen Ansprüche, wobei die variable Blende (111) eine oder mehrere Nebenöffnungen (119) aufweist.

8. Optisches System nach einem beliebigen der vorangegangenen Ansprüche, wobei die variable Blende (111) eine oder mehrere Nebenöffnungen (119) und eine Öffnung (118) in ausreichenden Größen aufweist, um die Pupille (107, 121) des optischen Systems nicht zu verdecken.

9. Optisches System nach einem beliebigen der vorangegangenen Ansprüche, wobei der Wellenfrontmodulator und die variable Blende (111) einer rückseitigen Öffnung des Objektivs (100) gegenüberliegend angeordnet sind.

10. Optisches System nach einem beliebigen der Ansprüche 1 bis 8, wobei der Wellenfrontmodulator und die variable Blende (111) im Inneren des Objektivs (100) gegenüberliegend angeordnet sind.

11. Optisches System nach Anspruch 9 oder 10, wobei der Wellenfrontmodulator und die variable Blende (111) in der Pupille (107, 121) des optischen Systems positioniert sind.

12. Optisches System nach Anspruch 9 oder 10, wobei der Wellenfrontmodulator und die variable Blende (111) in Bildebenen der Pupille (107, 121) des optischen Systems positioniert sind.

13. Mikroskop, umfassend ein optisches System nach einem beliebigen der vorangegangenen Ansprüche.

14. Laservorrichtung, umfassend ein optisches System nach einem beliebigen der Ansprüche 1-12.

## Revendications

1. Système optique comprenant :
- un objectif (100),
- un détecteur (103) apte à acquérir une image d'un échantillon, l'image étant formée sur le détecteur par un faisceau lumineux issu de l'échantillon le long d'un chemin optique, et
- une structure (104) pour mesurer et corriger les aberrations du système optique, dans lequel ladite structure comprend, à l'intérieur du chemin optique, un iris variable (111), l'iris variable (111) étant apte à créer des sous-pupilles (106, 113), chaque sous-pupille (106, 113) étant une partie du faisceau lumineux, et l'iris variable (111) étant apte à modifier la position d'une occlusion du faisceau lumineux qui permet à la partie du faisceau lumineux de passer vers le détecteur (103),
dans lequel la structure (104) est configurée pour mesurer une aberration du front d'onde en mesurant un décalage d'image sur le détecteur à la suite d'un changement de la position de l'occlusion du faisceau lumineux,
dans lequel la structure (104) comprend, à l'intérieur du chemin optique, un modulateur de front d'onde ;
**caractérisé en ce que** le modulateur de front d'onde est une lentille déformable (105, 112, 123) ;
la structure étant configurée pour corriger l'aberration du front d'onde en entraînant le modulateur de front d'onde en fonction du déplacement de l'image sur le détecteur (103), ladite image étant relative à une sous-pupille (106, 113) ;
dans lequel le modulateur de front d'onde et l'iris variable (111) sont adjacents.

2. Système optique selon la revendication 1, dans lequel l'iris variable (111) est mobile dans le parcours optique de manière à mesurer l'aberration du front d'onde en mesurant le déplacement d'un point focal d'un laser sur le détecteur (103) dans une ou plusieurs positions de l'iris variable (111).

3. Système optique selon la revendication 1 ou 2, dans lequel l'iris variable (111) est apte à modifier la forme de l'occlusion du faisceau lumineux, ce qui permet à une partie du faisceau lumineux de passer vers le détecteur (103).

4. Système optique selon l'une quelconque des revendications 1 à 3, dans lequel l'iris variable (111) est une structure lamellaire.

5. Système optique selon l'une quelconque des revendications 1 à 3, dans lequel l'iris variable (111) est une plaque perforée qui peut se déplacer de façon orthogonale à l'axe optique.

6. Système optique selon l'une quelconque des revendications 1 à 3, dans lequel l'iris variable (111) est une feuille rotative (117) avec une ou plusieurs ouvertures (119, 118).

7. Système optique selon l'une quelconque des revendications précédentes, dans lequel l'iris variable (111) comporte une ou plusieurs sous-ouvertures (119).

8. Système optique selon l'une quelconque des revendications précédentes, dans lequel l'iris variable (111) comporte une ou plusieurs sous-ouvertures (119) et une ouverture (118) de taille suffisante pour ne pas obstruer la pupille (107, 121) du système optique.

9. Système optique selon l'une quelconque des revendications précédentes, dans lequel le modulateur de front d'onde et l'iris variable (111) sont placés face à une ouverture arrière de l'objectif (100).

10. Système optique selon l'une quelconque des revendications 1 à 8, dans lequel le modulateur de front d'onde et l'iris variable (111) sont placés l'un en face de l'autre à l'intérieur de l'objectif (100).

11. Système optique selon la revendication 9 ou 10, dans lequel le modulateur de front d'onde et l'iris variable (111) sont placés dans la pupille (107, 121) du système optique.

12. Système optique selon la revendication 9 ou 10, dans lequel le modulateur de front d'onde et l'iris variable (111) sont placés dans des plans d'image de la pupille (107, 121) du système optique.

13. Microscope comprenant un système optique selon l'une quelconque des revendications précédentes.

14. Dispositif laser comprenant un système optique selon l'une quelconque des revendications 1 à 12.
